# EUROPÄISCHE PATENTSCHRIFT

(11) **EP 2 004 395 B1**
(45) Veröffentlichungstag und Bekanntmachung des Hinweises auf die Patenterteilung: **22.05.2013**
(21) Anmeldenummer: 07727056.9
(22) Anmeldetag: 19.03.2007
(51) Int. Cl.: B32B 5/18, B32B 27/12, E04C 2/296, E04F 13/04, E04F 13/14, E04F 15/18

(54) **BAUPLATTE ALS TRÄGER FÜR EINE FLÄCHENBEKLEIDUNG AUS KERAMIKFLIESEN, EINEM PUTZ ODER EINEM DÜNNSCHICHTIGEN SPACHTELMÖRTEL AN ODER IN GEBÄUDEN**
BUILDING BOARD AS CARRIER FOR A SURFACE CLADDING OF CERAMIC TILES, A PLASTER OR A THIN-LAYER TROWEL MORTAR ON OR IN BUILDINGS
PLAQUE DE CONSTRUCTION SERVANT DE SUPPORT POUR UN REVETEMENT DE SURFACE EN FEUTRE DE CERAMIQUE, EN ENDUIT OU EN MORTIER D'ENDUIT EN COUCHE MINCE SUR OU DANS DES BATIMENTS

(30) Priorität: 07.04.2006 DE 202006005694 U
(43) Veröffentlichungstag der Anmeldung: 24.12.2008
(73) Patentinhaber: Schlüter-Systems KG, 58640 Iserlohn (DE)
(72) Erfinder: SCHLÜTER, Werner, 58644 Iserlohn (DE)
(74) Vertreter: Schröter & Albrecht
(86) Internationale Anmeldenummer: PCT/EP2007/052578
(87) Internationale Veröffentlichungsnummer: WO 2007/115902

(56) Entgegenhaltungen:
- EP-A- 0 808 712
- DE-C2- 19 940 423
- DE-U1- 9 200 687
- FR-A- 2 351 784
- FR-A1- 2 774 715

## Beschreibung

Es sind Bauplatten für die angegebene Verwendung bekannt, bei denen eine Platte aus feuchtigkeitsbeständigem Schaumstoff zur notwendigen Versteifung beidseitig mit Zementmörtel und einem grobmaschigen Gittergewebe beschichtet ist.

Bekannt sind auch aus der DE 92 00 687.6 U1 Bauplatten, bei denen die Schaumstoffkernschicht aus Polyurethan besteht mit einer geschlossenzelligen Außenhaut, etwa in der Dicke von 25 mm. Auf der Sichtseite dieser Schaumstoffkernschicht ist eine Bahn aus Glasfaservlies eingeschäumt, wobei der Schaumstoff die Vliesbahn durchdringt.

Eine ähnliche Bauplatte als Sandwich-Baukörper ist aus der DE 19 27 794 U bekannt, bei der auf der Schaumstoffkernschicht ebenfalls eine Vliesstoffbahn eingeschäumt ist. Dabei kann zwischen den Deckschichten aus Vlies und der Schaumstoffkernschicht noch eine Bahn aus einem luft- und wasserdampfdurchlässigen Material angeordnet sein, beispielsweise aus einem Maschengebilde oder einem Netzwerk, wobei diese Zwischenschicht aufgeklebt sein kann.

Bekannt ist auch aus der DE 199 40 423 C2 eine Dämmplatte, insbesondere zur Verkleidung einer Außenwand eines Gebäudes oder als Fliesenträger im Naßzellenbau, mit einer plattenförmigen Dämmstoffschicht aus einem aufgeschäumten oder gegossenen Dämmmaterial, wobei auf einer oder beiden Seiten dieser Schaumstoffkernschicht als Trägermaterial für einen Außenputz oder einen Fliesenmörtel an der Oberfläche ein Gewebevlies eingeschäumt bzw. eingegossen ist, welches eine Deckschicht bildet.

Aus der FR 2 351 784 sind mehrschichtige Laminate bekannt, bestehend aus einer dehnbaren Kunststoffharzschicht mit einer darauf beidseitig aufgebrachten nicht oder nur leicht dehnbaren thermoplastischen Kunstharzschicht, die jeweils wiederum mit einer dritten Schicht bedeckt sind. Diese dritte Schicht kann dabei aus Kunststoff, Gewebe oder Papier bestehen. Die dehnbare Kernschicht kann aus geschäumtem Polystyrol bestehen. Es handelt sich dabei jedoch nur um nicht tragfähige Laminate, wie beispielsweise zur Bekleidung von Möbeln, Fahrzeugen etc.

Alle bekannten Bauplatten, die eingesetzt werden im Innen- und Außenbereich von Gebäuden, vorzugsweise jedoch in Feuchträumen wie Badezimmer oder dergleichen, sollen einen tragfähigen feuchtigkeitsbeständigen Untergrund für die anschließenden Flächenbekleidungen, wie beispielsweise Fliesen bilden. Sie ersetzen übliche Gipskartonplatten, Platten aus Holzwerkstoffen oder Gipsputze, die nicht als feuchtigkeitsbeständig gelten. Der Nachteil zementbeschichteter oder auch vliesbedeckter Bauplatten besteht darin, dass sich diese insbesondere bei einseitiger Feuchtigkeitsbeaufschlagung vor dem Einbau verziehen bzw. verwerfen und daher einen planparallelen Einbau an Wänden teilweise unmöglich machen.

Die Aufgabe der Erfindung besteht darin, Bauplatten auf der Basis von Schaumstoffplatten als feuchtigkeitsbeständige Träger für Flächenbekleidungen an oder in Gebäuden vorzuschlagen, die bei ausreichender Biegefestigkeit den Nachteil des Verzuges bei ungewollter Feuchtigkeitsbeaufschlagung nicht aufweisen.

Gelöst wird die Erfindungsaufgabe mit einer Bauplatte mit den Merkmalen des Anspruchs 1.

Durch das direkte Aufkleben von Papierbahnen oder dünnen nicht dehnbaren Kunststoffbahnen auf beiden Seiten der Schaumstoffkernschicht wird die solchermaßen bedeckte Bauplatte auch bei unbeabsichtigter Feuchtigkeitsbeaufschlagung längenunveränderlich, da die aufgeklebte wasserbeständige Papierbahn oder die nicht dehnbare Kunststoffbahn nicht längenveränderlich sind. Die Platte kann sich daher insgesamt nicht verziehen bzw. verwerfen. Auf diese beklebte Schaumstoffkernschicht wird anschließend eine Bahn aus Vlies oder einem gestrickten oder gewirkten Gewebe aufgeklebt, die dann den geeigneten Träger als Haftgrund für den Kleber einer Flächenbekleidung aus Keramikplatten, einen Putz oder einen dünnschichtigen Spachtelmörtel bildet. Die erfindungsgemäßen Bauplatten sind damit auch hinsichtlich ihrer Schaumstoffkernschicht gegenüber Feuchtigkeitsbeaufschlagungen gesperrt. Insbesondere derartige Bauplatten mit geringer Stärke im wesentlichen unter 50 mm, sind in besonderem Maße versteift.

Unter Vliesstoffen werden textile Flächengebilde als Wirrgelege aus einzelnen Fasern oder Fäden verstanden. Im Gegensatz dazu werden Gewebe, Gestricke und Gewirke aus regelmäßig geordneten Fäden oder Garnen hergestellt. Auch Filze gehören zu den Vliesstoffen.

Um die verwendete Schaumstoffkernschicht besonders feuchtigkeitsbeständig zu gestalten, wird bevorzugt, ein geschlossenzelliger Schaumstoff eingesetzt. Bei besonderen Anforderungen an die Trag- und Biegefestigkeit kann die Schaumstoffkernschicht aus mehreren miteinander verklebten bzw. verschweißten Schichten bestehen, die bevorzugt jeweils quer zueinander angeordnet sind.

Anhand eines abgebildeten Ausführungsbeispieles wird die Erfindung im folgenden näher erläutert. Es zeigen:

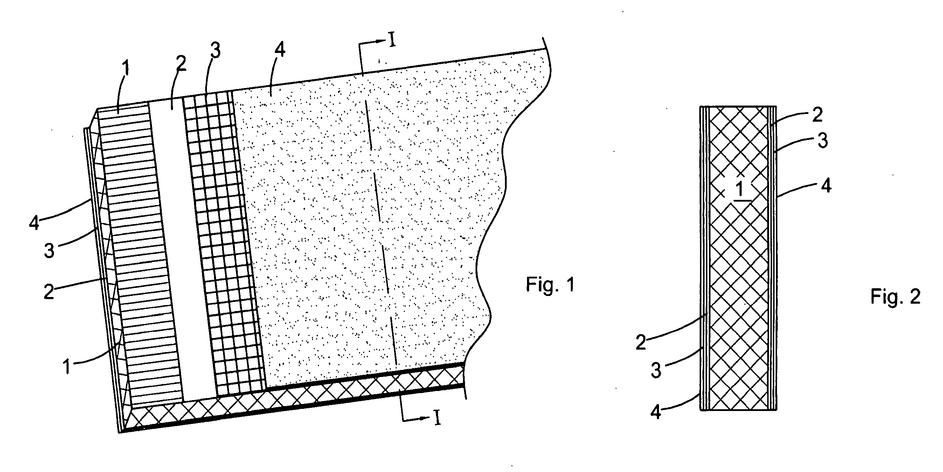

- **Fig. 1:**: in einer schematischen Perspektivdarstellung eine Bauplatte im Aufbau
und
- **Fig. 2:**: einen Schnitt nach der Linie I-I in Figur 1.

Den Kern der Bauplatte bildet eine feuchtigkeitsdichte Schaumstoffkernschichtplatte 1, vorzugsweise aus einem Polysterol mit geschlossenzelligem Schaumaufbau. Auf beiden Seiten dieser Schaumstoffkernschicht 1 ist eine wasserbeständige Papierbahn 2 oder eine nicht dehnbare Kunststoffbahn aufgeklebt. Darauf kann wiederum eine Bahn 3 aus einem Gitter- oder Gewebematerial aufgebracht. Mit einem geeigneten Kleber ist darauf eine Vliesstoffbahn 4 aufgeklebt bzw. auflaminiert, die auch direkt auf die Papierbahn 2 aufgeklebt sein kann. Alle Bahnen 2, 3 und 4 versteifen die Bauplatte und verhindern bei Feuchtigkeitseinflüssen Längenveränderungen und Verwerfungen der sandwichartig aufgebauten Bauplatte. Dabei verändern sich auch die verwendeten Kleber zur Anbringung der Papierbahn 2 bei Feuchtigkeitseinflüssen nach der Erhärtung nicht.

Eine erfindungsgemäße Bauplatte ist auch ausreichend biegesteif für die Montage. Sie ist als weiteres ausreichend biegesteif, um bei Montage auf ein Ständerwerk, beispielsweise für Zwischenwände, die freien Zwischenräume zu überbrücken.

## Patentansprüche

1. Verwendung einer Bauplatte als Träger für eine Flächenbekleidung aus Keramikfliesen, einem Putz oder einem dünnschichtigen Spachtelmörtel an oder in Gebäuden, bei der auf einer feuchtigkeitsbeständigen und feuchtigkeitsdichten Schaumstoffkernschicht (1) beidseitig eine wasserbeständige Papier- oder dünne Kunststofffolienbahn (2) aufgeklebt ist, auf denen jeweils eine Bahn (4) aus Vlies oder einem gestrickten oder gewirkten Gewebe aufgeklebt ist.

2. Verwendung einer Bauplatte nach Anspruch 1, **dadurch gekennzeichnet, dass** zwischen Papier- bzw. Kunststofffolienbahn (2) und einer Vliesstoffbahn (4) zusätzlich eine Bahn (3) aus grobmaschigem Gitter oder grobmaschigem Gewebe befestigt angeordnet ist.

3. Verwendung einer Bauplatte nach Anspruch 1, **dadurch gekennzeichnet, dass** die Schaumstoffkernschicht (1) feuchtigkeitsdicht ist.

## Claims

1. The use of a building board as a carrier for a surface cladding of ceramic tiles, a plaster or a thin-layer trowel mortar or in buildings, wherein there is stuck onto both sides of a moisture-resistant and moisture-proof foam core layer (1) a water-resistant paper or thin synthetic film strip (2) onto which respectively a strip (4) of fleece or a knitted or woven fabric is stuck.

2. The use of a building board according to Claim 1, **characterised in that** a strip (3) of coarse-meshed lattice or coarse-meshed fabric is additionally arranged fastened between the paper or synthetic film strip (3) and a fleece strip (4).

3. The use of a building board according to Claim 1, **characterised in that** the foam core layer (1) is moisture-proof.

## Revendications

1. Application d'un panneau structural comme support pour un revêtement de surface en carreaux de céramique, un enduit ou un mortier en couche mince sur ou dans des bâtiments, au cours de laquelle est collé de chaque côté, sur une couche de noyau de mousse (1) résistante à l'humidité et imperméable, un papier ou une bande de film de plastique imperméable sur lequel est collé respectivement une bande (4) de non-tissé ou de tissu tricoté ou tissé.

2. Application d'un panneau structural selon la revendication 1, **caractérisée en ce qu'**une bande (3) à grosses mailles est également posée entre la bande de papier ou plastique (2) et une bande de tissu non tissé (4) .

3. Application d'un panneau structural selon la revendication 1, **caractérisée en ce que** la couche de noyau de mousse (1) est imperméable.
